# EUROPEAN PATENT APPLICATION

(11) **EP 4 303 956 A1**
(43) Date of publication of application: **10.01.2024**
(21) Application number: 22763211.4
(22) Date of filing: 28.02.2022
(51) Int. Cl.: H01M 4/139, H01M 4/62, H01B 1/06, H01B 1/10, H01M 10/0525, H01M 10/0562

(54) **SOLID ELECTROLYTE, AND ELECTRODE MIXTURE AND BATTERY CONTAINING THE SAME**

(30) Priority: 05.03.2021 JP 2021035754
(71) Applicant: Mitsui Mining & Smelting Co., Ltd., Shinagawa-ku Tokyo 141-8584 (JP)
(72) Inventor: MIKI, Joji, Ageo-shi, Saitama 362-0021 (JP); MATSUSHITA, Takayuki, Ageo-shi, Saitama 362-0021 (JP); KANAMORI, Tomohiro, Ageo-shi, Saitama 362-0021 (JP)
(74) Representative: Novagraaf Technologies
(86) International application number: PCT/JP2022/008388
(87) International publication number: WO 2022/186155

(57) **Abstract**

A solid electrolyte contains a lithium (Li) element, a phosphorus (P) element, a sulfur (S) element, and an X element, where X represents at least one element selected from the group consisting of a chlorine (Cl) element, a bromine (Br) element, and an iodine (I) element. The solid electrolyte has a peak attributed to a fluorine (F) element in surface analysis based on X-ray photoelectron spectroscopy. It is preferable that the ratio (quantitative value of F1s/quantitative value of P2p) of quantitative value of F1s (atom%) and quantitative value of P2p (atom%), calculated based on X-ray photoelectron spectroscopy with the total amount of Lils, C1s, O1s, F1s, P2p, S2p, Cl2p, and Br3d being set to 100%, is 0.01 or more and 0.34 or less.

## Description

### Technical Field

The present invention relates to a solid electrolyte. The present invention also relates to an electrode material mixture and a battery that contain the solid electrolyte.

### Background Art

In recent years, a solid electrolyte that can replace a liquid electrolyte used in many liquid-based batteries has attracted attention. A solid-state battery that contains a solid electrolyte is expected to be brought into practical use as a battery that is not only safer than a liquid-based battery that contains a flammable organic solvent, but also has high energy density.

The technique disclosed in Patent Literature 1 is known as a conventional technique for a solid electrolyte, for example. In recent years, studies are actively being conducted to obtain a solid electrolyte that provides even better performance. Various investigations are being performed on, for example, a solid electrolyte with high ion conductivity.

### Citation List

### Patent Literature

Patent Literature 1: US 2016/156064A1

### Summary of Invention

It is an object of the present invention to provide a solid electrolyte that has higher ion conductivity.

The present invention provides a solid electrolyte containing a lithium (Li) element, a phosphorus (P) element, a sulfur (S) element, and an X element, where X represents at least one element selected from the group consisting of a chlorine (Cl) element, a bromine (Br) element, and an iodine (I) element, wherein the solid electrolyte has a peak attributed to a fluorine (F) element in surface analysis based on X-ray photoelectron spectroscopy.

### Description of Embodiments

Hereinafter, the present invention will be described based on a preferred embodiment thereof. The solid electrolyte according to the present invention contains at least a lithium (Li) element, a phosphorus (P) element, a sulfur (S) element, and an X element.

The X element contained in the solid electrolyte of the present invention is a halogen element. More specifically, at least one element selected from the group consisting of a chlorine (Cl) element, a bromine (Br) element, and an iodine (I) element is used. The X element may be any one of the elements listed above, or a combination of two or more of the elements listed above.

From the viewpoint of increasing the lithium ion conductivity of the solid electrolyte of the present invention, the solid electrolyte preferably contains a Cl element or a Br element as the X element, and more preferably contains a Br element and a Cl element.

The solid electrolyte of the present invention that contains the elements described above may be a crystalline compound. Alternatively, the solid electrolyte of the present invention may be a glassy compound. As used herein, the term "crystalline compound" refers to a substance that shows a diffraction peak derived from a crystal phase when the solid electrolyte is subjected to X-ray diffraction (hereinafter also referred to as "XRD") measurement.

The solid electrolyte of the present invention that contains the elements described above preferably contains, from the viewpoint of increasing the lithium ion conductivity of the solid electrolyte, a compound represented by the following composition formula: LiₐPS_{b}X_{c}, where X represents at least one halogen element, a is a number of 3.0 or more and 6.0 or less, b is a number of 3.5 or more and 4.8 or less, and c is a number of 0.1 or more and 3.0 or less.

In the composition formula given above, a that represents the molar ratio of the Li element is, for example, preferably a number of 3.0 or more and 6.0 or less, more preferably a number of 3.2 or more and 5.8 or less, and even more preferably a number of 3.4 or more and 5.4 or less. Note that a may be a number less than 5.4.

In the composition formula given above, b that represents the molar ratio of the S element is, for example, preferably a number of 3.5 or more and 4.8 or less, more preferably a number of 3.8 or more and 4.6 or less, and even more preferably a number of 4.0 or more and 4.4 or less. Note that b may be a number less than 4.4.

In the composition formula given above, c is, for example, preferably a number of 0.1 or more and 3.0 or less, more preferably a number of 0.8 or more and 2.5 or less, and even more preferably a number of 1.2 or more and 2.0 or less.

The compound represented by the composition formula in which a, b, and c are within the ranges described above has sufficiently high lithium ion conductivity.

The solid electrolyte of the present invention may contain only one compound represented by the composition formula given above, or two or more compounds A.

In the present invention, the compound prepared by adjusting the amounts of materials to satisfy the composition formula LiₐPS_{b}X_{c} may contain an element other than the Li element, the P element, the S element, and the halogen (X) element. For example, the Li element may be partially replaced by another alkali metal element, the P element may be partially replaced by another pnictogen element, or the S element may be partially replaced by another chalcogen element.

The solid electrolyte of the present invention preferably has, in particular, a crystal phase of an argyrodite-type crystal structure, from the viewpoint of increasing the lithium ion conductivity of the solid electrolyte.

The term "argyrodite-type crystal structure" used herein refers to a crystal structure of a group of compounds derived from a mineral represented by the following chemical formula: Ag₈GeS₆. Whether or not the solid electrolyte of the present invention has a crystal phase of an argyrodite-type crystal structure can be confirmed by performing XRD measurement or the like. For example, in a diffraction pattern obtained through XRD using CuKα1 rays, the crystal phase of an argyrodite-type crystal structure exhibits characteristic diffraction peaks at 2θ = 15.3° ± 1.0°, 17.7° ± 1.0°, 25.2° ± 1.0°, 30.0° ± 1.0°, 30.9° ± 1.0°, and 44.3° ± 1.0°. Furthermore, the crystal phase of an argyrodite-type crystal structure may also exhibit, in addition to the diffraction peaks described above, characteristic diffraction peaks at, for example, 2θ = 47.2° ± 1.0°, 51.7° ± 1.0°, 58.3° ± 1.0°, 60.7° ± 1.0°, 61.5° ± 1.0°, 70.4° ± 1.0°, and 72.6° ± 1.0°, depending on the type of element that constitutes the solid electrolyte. For identification of the diffraction peaks derived from the argyrodite-type crystal structure, it is possible to use, PDF data No. 00-034-0688, for example.

The solid electrolyte of the present invention is preferably composed of a powder that is an aggregate of particles. The particle size of the solid electrolyte of the present invention, which is represented by cumulative volume particle size D₅₀ at 50% cumulative volume using a laser diffraction scattering particle size distribution measurement method, is, for example, preferably 2.0 µm or less, more preferably 1.8 µm or less, and even more preferably 1.5 µm or less. On the other hand, the cumulative volume particle size D₅₀ is, for example, preferably 0.45 µm or more, more preferably 0.50 µm or more, and even more preferably 0.55 µm or more. By setting the particle size within the above-described range, the contact point and the contact area between solid electrolyte particles increase, and thus the lithium ion conductivity can be effectively improved.

The solid electrolyte of the present invention contains a fluorine (F) element in addition to the elements described above. Fluorine may be present as an element that constitutes a lithium ion conductive substance that constitutes the solid electrolyte of the present invention, or may be present as an element that constitutes a substance different from the lithium ion conductive substance. In either case, fluorine is preferably contained in the surface regions of particles that constitute the solid electrolyte of the present invention. The term "surface region" used in the specification of the present application refers to the surface of a solid electrolyte particle and the vicinity thereof. As a result of investigations conducted by the inventors of the present application, it was found that the ion conductivity of the solid electrolyte as a whole is improved by fluorine being present in the surface regions of the solid electrolyte particles. Although the reason is currently not clear, the inventors of the present application suspect that, when fluorine is present in the surface regions of the solid electrolyte particles, physical contact between the solid electrolyte particles increases, thus increasing the ion conductivity.

Furthermore, the solid electrolyte of the present invention contains an X element, where X represents at least one element selected from the group consisting of a chlorine (Cl) element, a bromine (Br) element, and an iodine (I) element). The X element and fluorine are both Group 17 elements, and thus they tend to have high affinity for each other. Accordingly, fluorine is likely to adsorb to the solid electrolyte surface, and thus a surface protection effect is realized, and the frequency of contact with moisture can be reduced. It is surmised that this consequently contributes to suppression of a reduction in ion conductivity.

Particularly when the solid electrolyte of the present invention is a crystalline compound, the solid electrolyte tends to have high hardness. For this reason, the physical contact between the solid electrolyte particles may be insufficient. In the present invention, it is considered that, as a result of fluorine being present in the surface regions of the solid electrolyte particles, it is possible to sufficiently ensure physical contact between the solid electrolyte particles, thus improving the ion conductivity.

In particular, the hardness of the crystal phase of an argyrodite-type crystal structure is much higher, and thus the advantageous effects described above are prominent.

Whether or not fluorine is present in the surface regions of the solid electrolyte particles of the present invention can be confirmed by determining whether or not a peak attributed to a fluorine (F) element is observed when surface analysis based on X-ray photoelectron spectroscopy (hereinafter also referred to as "XPS") is performed. Conditions for performing the XPS measurement will be described in Examples that are described below.

In the present invention, it is sufficient that fluorine is present only in the surface regions of the solid electrolyte particles, and the presence of fluorine in the center regions of the particles is not required. From the viewpoint of further improving ion conductivity, it is advantageous that fluorine is preferably not present in the center regions of the particles. In the case where fluorine is present in the center regions of the particles, from the viewpoint of further improving ion conductivity, the concentration of fluorine in the center region is preferably lower than the concentration of fluorine in the surface region.

In the solid electrolyte of the present invention, the term "surface region" of a solid electrolyte particle refers to a region with a depth of less than 10 nm from the surface of the particle, the depth being where photoelectrons can be detected based on XPS. On the other hand, the term "center region" of the solid electrolyte particle refers to a region that is located closer to the center of the particle than the surface region of the particle. The average concentration of fluorine in the surface regions and the center regions of the particles can be measured based on XPS.

In the solid electrolyte of the present invention, there is no particular limitation on the form in which fluorine is present in the surface regions of the particles. Ordinarily, fluorine is preferably present in the form of a fluorine compound from the viewpoint of increasing the ion conductivity of the solid electrolyte. In particular, from the viewpoint of further increasing the ion conductivity of the solid electrolyte, fluorine is preferably present in the form of a fluoride solvent.

As the fluoride solvent, a fluoride, which is a liquid at 20°C, may be used. Specific examples include a fluorine-containing linear hydrocarbon, a fluorine-containing cyclic hydrocarbon, a fluorine-containing alcohol, a fluorine-containing ether, a fluorine-containing ester, a fluorine-containing ketone, and the like.

An example of the fluorine-containing linear hydrocarbon may be a linear alkane obtained by replacing one or all hydrogen atoms with fluorine.

An example of the fluorine-containing cyclic hydrocarbon may be a cyclic alkane obtained by replacing one or all hydrogen atoms with fluorine.

Examples of the fluorine-containing ether include an alkyl fluoroalkyl ether, a difluoroalkyl ether, and the like. From the viewpoint of further increasing the ion conductivity of the solid electrolyte, it is preferable to use an alkyl fluoroalkyl ether. From the viewpoint of increasing the ion conductivity of the solid electrolyte even more, it is preferable to use an alkyl perfluoroalkyl ether.

Examples of the alkyl perfluoroalkyl ether include a methyl perfluorobutyl ether, an ethyl perfluorobutyl ether, and the like.

Out of various types of fluoride solvents that were described above, from the viewpoint of further increasing the ion conductivity of the solid electrolyte, particularly, a fluorine-containing ether is preferably used as the solvent.

In the solid electrolyte of the present invention, it is preferable that the amount of fluorine present in the surface regions of the solid electrolyte particles is determined based on the balance between formation of a good conductive path due to the presence of fluorine and the ion conductivity of the solid electrolyte. From this viewpoint, the amount of fluorine present in the surface regions of the solid electrolyte particles is set such that the ratio (quantitative value of F1s/quantitative value of P2p) of quantitative value of F1s (atom%) and quantitative value of P2p (atom%), calculated based on X-ray photoelectron spectroscopy with the total amount of Li1s, C1s, O1s, F1s, P2p, S2p, Cl2p, and Br3d being set to 100%, is preferably 0.01 or more and 0.34 or less, more preferably 0.01 or more and 0.25 or less, and even more preferably 0.01 or more and 0.15 or less. The quantitative value is calculated based on the total of peak areas derived from Li1s, C1s, O1s, F1s, P2p, S2p, Cl2p, and Br3d observed based on X-ray photoelectron spectroscopy.

From the same viewpoint as described above, the amount of fluorine contained in the solid electrolyte of the present invention is preferably 0.1 atomic weight% or more and 5 atomic weight% or less, more preferably 0.1 atomic weight% or more and 3 atomic weight% or less, and even more preferably 0.1 atomic weight% or more and 1 atomic weight% or less relative to the total amount of the solid electrolyte.

Various types of methods can be used to provide fluorine in the surfaces of the solid electrolyte particles. For example, a mixed solution that contains solid electrolyte particles produced using a known method and a fluoride solvent may be subjected to wet milling to provide fluorine in surfaces of the particles created through the wet milling.

Alternatively, solid electrolyte particles produced using a known method may be immersed in a fluoride solvent to provide fluorine in surfaces of the particles.

Alternatively, solid electrolyte particles produced using a known method may be subjected to a plasma treatment in the presence of fluorine to provide fluorine in surfaces of the particles.

The solid electrolyte of the present invention is usually in the form of a solid, but may contain a very small amount of a solvent according to the production method thereof. The amount of solvent contained in the solid electrolyte may be, for example, 5 mass% or less, 3 mass% or less, or 1 mass% or less. The amount of solvent contained in the solid electrolyte can be confirmed based on, for example, ignition loss method.

The solid electrolyte of the present invention has lithium ion conductivity when in a solid state. The solid electrolyte of the present invention preferably has lithium ion conductivity at room temperature, or in other words, at 25°C of 0.5 mS/cm or more, more preferably 1.0 mS/cm or more, and even more preferably 1.5 mS/cm or more. The lithium ion conductivity can be measured using a method described in Examples given later.

The solid electrolyte of the present invention can be produced preferably using a method described below. A lithium source compound, a phosphorus source compound, a sulfur source compound, and a halogen source compound are used as raw materials. As the lithium source compound, for example, lithium sulfide (Li₂S) can be used. As the phosphorus source compound, for example, phosphorus pentasulfide (P₂S₅) can be used. As the sulfur source compound, when the lithium source compound and/or the phosphorus source compound are sulfides, the sulfides can be used as the sulfur source compound. As the halogen source compound, a compound B (LiX) can be used. These raw materials are mixed such that the lithium element, the phosphorus element, the sulfur element, and the halogen element satisfy a predetermined molar ratio. Then, a mixture of these raw materials is calcined in an inert atmosphere or a hydrogen sulfide gas-containing atmosphere. In this way, a compound that is represented by LiₐPS_{b}X_{c} and has a crystal phase of an argyrodite-type crystal structure can be obtained. The hydrogen sulfide gas-containing atmosphere may be composed of 100% hydrogen sulfide gas, or may be composed of a mixed gas of a hydrogen sulfide gas and an inert gas such as argon. The calcination temperature is preferably, for example, 350°C or more and 550°C or less. The time for which the calcination temperature is held is preferably set to, for example, 0.5 hours or more and 20 hours or less.

The solid electrolyte obtained in the manner described above can be subjected to predetermined milling processing. The milling processing can be performed based on a wet method or a dry method. Various types of media mills can be used to perform the milling processing. Examples of the media mills that can be used include a ball mill, a bead mill, a paint shaker, a homogenizer, and the like. As a dispersing medium used in a media mill, balls and beads that are made of various types of ceramics such as alumina and zirconia can be used. The diameter of the dispersing medium may be, for example, 0.1 mm or more and 50 mm or less.

In the case where the milling processing is performed based on a wet method, it is preferable to use an organic solvent as a dispersant from the viewpoint of suppressing the generation of hydrogen sulfide caused by a reaction between the solid electrolyte and water. Examples of the organic solvent include: aromatic organic solvents such as toluene, xylene, benzene, and solvent naphtha; and aliphatic organic solvents such as heptane, decane, normal hexane, cyclohexane, and mineral spirits. These organic solvents can be used alone or in a combination of two or more.

In particular, by using a fluoride, which was described above, as the organic solvent, fluorine derived from the fluoride can be provided in surfaces of the particles created through the wet milling.

The organic solvent and the solid electrolyte that were described above are mixed to prepare a slurry, and the slurry is subjected to the wet milling. The concentration of the solid electrolyte contained in the slurry is preferably set to, for example, 5 mass% or more and 50 mass% or less, from the viewpoint of successfully obtaining a solid electrolyte with high lithium ion conductivity. In the wet milling using a media mill, the proportion of the dispersing medium to the slurry is preferably set such that the dispersing medium is used in an amount of 5 parts by mass or more and 50 parts by mass or less relative to 100 parts by mass of the slurry, from the viewpoint of easily obtaining a solid electrolyte with high lithium ion conductivity. Ordinarily, the dispersion time using a media mill is set to 0.5 hours or more and 60 hours or less, from the viewpoint of easily obtaining a solid electrolyte with high lithium ion conductivity.

The solid electrolyte of the present invention can be used as a material for constituting a solid electrolyte layer, a positive electrode layer, or a negative electrode layer. Specifically, the solid electrolyte of the present invention can be used in a battery that includes a positive electrode layer, a negative electrode layer, and a solid electrolyte layer provided between the positive electrode layer and the negative electrode layer. That is, the solid electrolyte can be used in a so-called solid-state battery. More specifically, the solid electrolyte can be used in a lithium solid-state battery. The lithium solid-state battery may be a primary battery or a secondary battery. There is no particular limitation on the battery shape. For example, a laminate shape, a cylindrical shape, a prismatic shape, or the like can be used. The term "solid-state battery" used herein encompasses not only a solid-state battery that does not contain a liquid substance or a gel substance as the electrolyte, but also a solid-state battery that contains, for example, 50 mass% or less, 30 mass% or less, or 10 mass% or less of a liquid substance or a gel substance as the electrolyte.

In the case where the solid electrolyte of the present invention is contained in the solid electrolyte layer, the solid electrolyte layer can be produced using, for example, any of the following methods: a method in which a slurry that contains a solid electrolyte, a binder, and a solvent is dropped onto a substrate, and the slurry is spread using a doctor blade or the like; a method in which a substrate and a slurry are brought into contact with each other, and then cut using an air knife; and a method in which a coating film is formed using a screen printing method or the like, and then heated and dried to remove the solvent. Alternatively, the solid electrolyte layer can also be produced by pressing a solid electrolyte powder into a powder compact, and subjecting the powder compact to appropriate processing.

From the viewpoint of balance between prevention of a short-circuit and volume capacity density, typically, the thickness of the solid electrolyte layer is preferably 5 µm or more and 300 µm or less, and more preferably 10 µm or more and 100 µm or less.

The solid electrolyte of the present invention is used together with an active material to constitute an electrode material mixture. The proportion of the solid electrolyte in the electrode material mixture is typically 10 mass% or more and 50 mass% or less. The electrode material mixture may also contain other materials such as a conductive aid and a binder as needed. A positive electrode layer and a negative electrode layer can be each produced by mixing an electrode material mixture and a solvent to prepare a paste, applying the paste onto a current collector such as an aluminum foil, and drying the paste.

As a positive electrode material for constituting the positive electrode layer, any positive electrode material used as the positive electrode active material in a lithium ion battery can be used as appropriate. For example, a lithium-containing positive electrode active material, specifically, a spinel-type lithium transition metal oxide, a lithium metal oxide that has a layered structure, and the like can be used. By using a high-voltage type positive electrode material as the positive electrode material, the energy density can be improved. The positive electrode material may contain, in addition to the positive electrode active material, a conductive material or another material.

As a negative electrode material for constituting the negative electrode layer, any negative electrode material used as the negative electrode active material in a lithium ion battery can be used as appropriate. The solid electrolyte of the present invention is electrochemically stable. For this reason, a lithium metal or a carbon-based material, which is a material that performs charging and discharging at a low potential (about 0.1 V versus Li⁺/Li) corresponding to the potential of the lithium metal, such as graphite, artificial graphite, natural graphite, or non-graphitizable carbon (hard carbon) can be used as the negative electrode material. By using any of the materials listed above as the negative electrode material, the energy density of the solid-state battery can be improved remarkably. It is also possible to use, as the active material, silicon or tin that is considered to be a promising high capacity material. In a battery in which an ordinary electrolyte solution is used, the electrolyte solution reacts with the active material during charging and discharging, and corrosion occurs on the active material surface, causing remarkable deterioration in the battery characteristics. In contrast, when the solid electrolyte of the present invention is used instead of the electrolyte solution, and silicon or tin is used as the negative electrode active material, a corrosion reaction as described above does not occur, and thus the durability of the battery can be improved. The negative electrode material may also contain, in addition to the negative electrode active material, a conductive material or another material.

### Examples

Hereinafter, the present invention will be described in further detail based on examples. However, the scope of the present invention is not limited to the examples given below. Unless otherwise stated, the percent sign "%" used herein means "mass%".

Example 1

### (1) Preparation of Solid Electrolyte

A Li₂S powder, a P₂S₅ powder, a LiCl powder, and a LiBr powder were weighed to satisfy the following composition: Li_{5.4}PS_{4.4}Cl_{0.8}Br_{0.8}. These powders were milled and mixed using a ball mill to obtain a mixed powder. The mixed powder was calcined to obtain a calcined product of a lithium ion conductive sulfide. The calcination was performed using a tubular electric furnace. During the calcination, a 100% pure hydrogen sulfide gas was passed through the electric furnace at a flow rate of 1.0 L/min. The calcination temperature was set to 450°C, and the calcination was performed for 4 hours. As a result of XRD measurement, it was confirmed that the obtained calcined product had a crystal phase of an argyrodite-type crystal structure.

### (2) Wet Milling of Solid Electrolyte

The calcined product was coarsely disintegrated using a mortar and a pestle, and then disintegrated using a hammer crusher. The disintegrated product was mixed with a solvent to obtain a slurry with a concentration of 10.8%. As the solvent, a mixture of ethyl nonafluorobutyl ether and ethyl nonafluoroisobutyl ether was used. The obtained slurry was placed in a planetary ball mill apparatus (zirconia beads with a diameter of 0.8 mm) and then subjected to wet milling. The wet milling was performed for 1 hour using 30 parts by volume of beads (the beads volume was calculated from the packing density) relative to the milling vessel with a capacity of 100 parts by volume. After the wet milling, the slurry was subjected to solid-liquid separation, and the obtained solid was dried. The drying was performed at 150°C under a vacuum of -0.09 MPa relative to the atmospheric pressure for 20 minutes. The dried calcined product was classified using a sieve with a mesh size of 53 µm. In this way, an intended solid electrolyte was obtained.

### Example 2

An intended solid electrolyte was obtained in the same manner as in Example 1, except that a mixture of methyl nonafluorobutyl ether and methyl nonafluoroisobutyl ether was used as the solvent in the wet milling of Example 1, and a slurry with a concentration of 10.3% was obtained.

### Comparative Example 1

An intended solid electrolyte was obtained in the same manner as in Example 1, except that toluene was used as the solvent in the wet milling of Example 1, and a slurry with a concentration of 16.7% was obtained.

### Evaluation

The solid electrolytes obtained in Examples and Comparative Example were subjected to XPS measurement performed in the manner described below. In addition, particle size D₅₀ and lithium ion conductivity were also measured using the methods described above. The results are shown in Table 1.

### XPS

The solid electrolyte subjected to the wet milling was dried under the above-described conditions, and the solid electrolyte particles were subjected to surface analysis using a Versa Probe III available from ULVAC-PHI, Inc. The conditions and the like used in the measurement are as follows.
Excitation X ray: monochromatic Al rays (1486.7 eV)
Output: 50 W
Acceleration voltage: 15 kV
X-ray irradiation diameter: 200 µmϕ
Measurement area: 1000 µm × 300 µm
Take of Angle: 45°
Pass energy: 26.0 eV
Energy step: 0.1 eV

XPS data was analyzed using data analysis software (MultiPak Ver. 9.0 available from ULVAC-PHI, Inc.). As the background mode, Iterated Shirley was used. The orbit used to calculate each element was determined as follows.
Li: 1s
C: 1s
O: 1s
F: 1s
P: 2p
S: 2p
Cl: 2p
Br: 3d

### Particle Size D₅₀

In an automatic sample feeder for laser diffraction particle size distribution measurement apparatus (Microtrac SDC available from Microtrac BEL Corporation), a solid electrolyte was introduced into toluene and irradiated with an ultrasonic wave of 30 W a plurality of times for 60 seconds at a flow rate of 50%, and thereafter, a particle size distribution was measured using a laser diffraction particle size distribution analyzer MT 3000 II available from Microtrac BEL Corporation. Particle size D₅₀ was determined from a volume-based particle distribution chart obtained from the particle size distribution measurement.

### , Lithium Ion Conductivity

A solid electrolyte was subjected to uniaxial press molding in a glove box purged with sufficiently dried Ar gas (with a dew point of -60°C or less). Furthermore, the solid electrolyte was molded at a pressure of 200 MPa using a cold isostatic pressing apparatus. In this way, a pellet with a diameter of 10 mm and a thickness of about 4 mm to 5 mm was produced. A carbon paste for forming an electrode was applied onto both upper and lower surfaces of the pellet, and the pellet was subjected to a heat treatment at 180°C for 30 minutes. In this way, a sample for ion conductivity measurement was produced. The lithium ion conductivity of the sample was measured using Solartron 1255B available from TOYO Corporation. The measurement was performed at a temperature of 25°C and a frequency of 0.1 Hz to 1 MHz based on an alternating current impedance method.

**[Table 1]**

| | | Example 1 | Example 2 | Comparative Example 1 |
|---|---|---|---|---|
| XPS (atomic weight%) | Li 1s | 31.3 | 30.5 | 32.0 |
| | C 1s | 15.5 | 15.9 | 13.3 |
| | O 1s | 12.6 | 14.0 | 13.7 |
| | F 1s | 0.2 | 0.3 | 0.0 |
| | P 2p | 5.4 | 5.5 | 5.5 |
| | S 2p | 23.9 | 22.7 | 24.1 |
| | Cl 2p | 6.3 | 6.4 | 6.5 |
| | Br 3d | 4.8 | 4.7 | 4.9 |
| [F 1s] / [P 2p] | | 0.04 | 0.05 | 0.00 |
| Particle size D₅₀ (µm) | | 0.8 | 0.8 | 0.8 |
| Lithium ion conductivity (mS/cm) | | 3.9 | 3.9 | 2.5 |

As is clear from the results shown in Table 1, when the solid electrolytes obtained in Examples were subjected to surface analysis based on XPS, peaks attributed to fluorine were observed, and thus the solid electrolytes of Examples exhibited higher lithium ion conductivity than that of the solid electrolyte of Comparative Example.

### Industrial Applicability

According to the present invention, it is possible to provide a solid electrolyte that has an ion conductivity higher than that of conventional solid electrolytes.

## Claims

1. A solid electrolyte comprising a lithium (Li) element, a phosphorus (P) element, a sulfur (S) element, and an X element, where X represents at least one element selected from the group consisting of a chlorine (Cl) element, a bromine (Br) element, and an iodine (I) element,
wherein the solid electrolyte has a peak attributed to a fluorine (F) element in surface analysis based on X-ray photoelectron spectroscopy.

2. The solid electrolyte according to claim 1, comprising a fluoride solvent.

3. The solid electrolyte according to claim 1 or 2,
wherein the ratio (quantitative value of F1s/quantitative value of P2p) of quantitative value of F1s (atom%) and quantitative value of P2p (atom%), calculated based on X-ray photoelectron spectroscopy with the total amount of Li1s, C1s, O1s, F1s, P2p, S2p, Cl2p, and Br3d being set to 100%, is 0.01 or more and 0.34 or less.

4. The solid electrolyte according to any one of claims 1 to 3, comprising a crystal phase of an argyrodite-type crystal structure.

5. An electrode material mixture comprising:
the solid electrolyte according to any one of claims 1 to 4; and
an active material.

6. A battery comprising:
a positive electrode layer;
a negative electrode layer; and
a solid electrolyte layer provided between the positive electrode layer and the negative electrode layer,
wherein the battery contains the solid electrolyte according to any one of claims 1 to 4.
